# EUROPEAN PATENT APPLICATION

(11) **EP 0 603 140 A1**
(43) Date of publication of application: **22.06.1994**
(21) Application number: 93830498.7
(22) Date of filing: 13.12.1993
(51) Int. Cl.: A47F 5/00, A47F 1/12, B65G 1/06

(54) **Shelving shelf for self-service supermarkets, having a conveyor belt for moving grocery products gradually from to bottom to the front of the shelf**

(30) Priority: 14.12.1992 IT MC920056
(71) Applicant: Antinori, Piero, I-60044 Fabriano (AN) (IT)
(72) Inventor: Antinori, Piero, I-60044 Fabriano (AN) (IT)
(74) Representative: Baldi, Claudio

(57) **Abstract**

This invention concerns a shelving shelf for self-service supermarkets having a conveyor belt for moving grocery products progressively from the back to the front of the shelf, as the products at the front are removed.

## Description

This design patent application concerns a shelving shelf for self-service supermarkets having a conveyor belt for moving grocery products progressively from the back to the front of the shelf, as the products at the front are removed.

The device has been designed to improve shelving used in self-service supermarkets, departmental stores or other large shops.

The shelving which is so very widely used today does in fact have a number of practical problems due to its structure and use.

Generally, the shelves of conventional shelving are stacked - as a rule in the mornings - with products arranged in rows; during the day these products are quite obviously removed by customers from the front.

This means that as the hours go by, the goods still available are all stacked at the back of the shelves, often out of the customer's sight; when this happens, customers may question the efficiency and organization of the shop.

At the same time, the fact that the goods are no longer at the front of the shelf is also very unattractive in that the decorative and furnishing aspect of large departmental stores is almost exclusively given by the coloured products on sale and not by the bare metal structures of the shelving.

Besides the problem of appearance, the gradual destocking of the front of the shelf also entails a number of practical problems.

First and foremost, when the goods are at the back of the shelf, they are difficult to reach, above all from the top shelves; this also poses a structural limitation for conventional shelving whose depth cannot exceed a set standard size since customers would otherwise not be able to reach the goods stored at the back - at least for the majority of customers.

On the other hand, it is obvious that having to use shelving of reduced depth often means that it is not possible to make full use of the space available in a shop or store.

This invention is designed to overcome all these problems; the inventive idea was to construct a shelf having a substantially conventional supporting structure and, above all, which fits current metal shelving, characterised in that the same features a closed circuit rotating conveyor belt whose dimensions cover practically the entire surface on which the products are stored.

On the new shelf, the product must in fact be placed on the above rotating belt.

This belt (automatically or semi-automatically according to the structural version in question) moves the rows of products stored at the back to the front, as the front rows are removed by customers.

This means that the front of the shelving will be filled with products at all time, at least until the shelves have been emptied completely.

Thanks to this invention, the shelves will appear to be well filled with products at all times, provided that there is at least one row of goods left on the shelf; this also makes it possible to construct shelving of any depth, since even in the case of very deep shelves, customers will always find the goods at the front of the shelf in a position which is easy to reach, regardless of the depth of the shelf.

For major clarity, the description of the invention continues with reference to the enclosed drawings which are intended for purposes of illustration and not in a limiting sense, whereby:

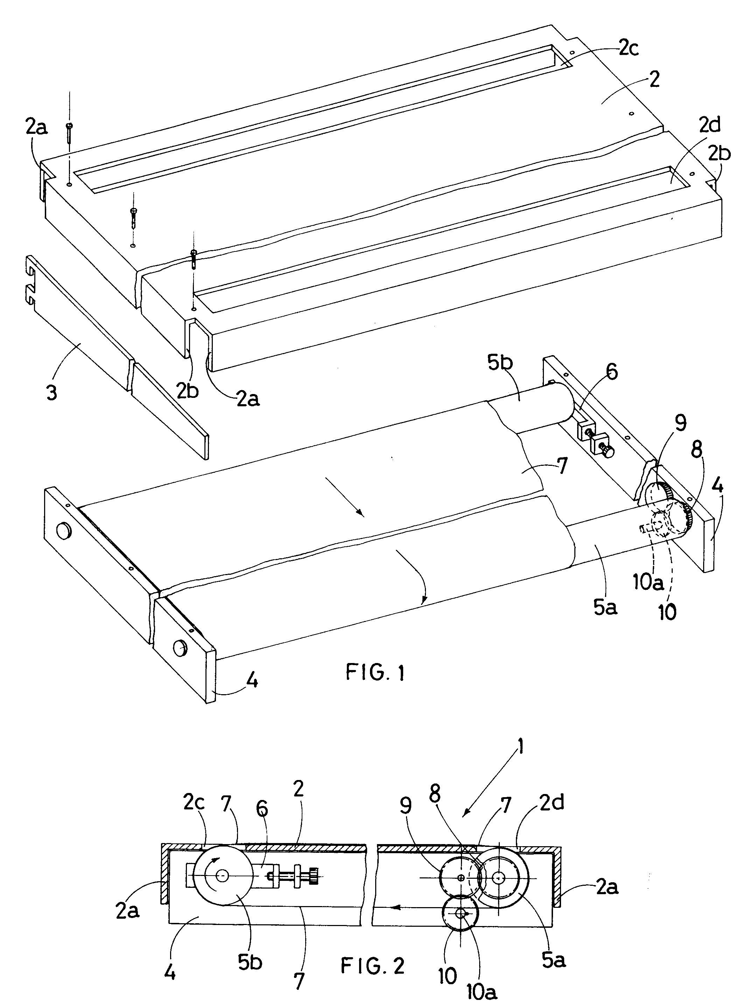

- figure 1 is an axonometric blow-up of the two principal components of the invention, the supporting shelf and the underlying supporting structure of the belt;
- figure 2 is a cross-section with a transverse plane of the shelf for shelving according to the invention.

With reference to the enclosed drawings, the shelf according to the invention (1) consists of a conventional metal box-shaped structure including a rectangular supporting surface (2) having four perimeter edges bent 90° downwards, of which two are longitudinal (2a) and two transverse (2b), the latter being designed to rest on conventionally structured transverse shelves (3) on the sides of the shelving.

Said shelf (1) being characterised by two structural metal sections (4), fixed at the bottom of the same and positioned parallel but slightly inwards with respect to the transverse edges (2b); said structural metal sections (4) extending from the front edge to the back edge of shelf (1).

These structural sections (4) being used to fix two rollers (5a and 5b), positioned parallel, but slightly inwards with respect to the longitudinal edges (2a) of the shelf (1); the roller (5a) being positioned towards the front of shelf (1) and supported by supporting pins fixed directly to the above structural metal sections (4) and connected, by means of a series of idle gears, to a power drive which rotates the same.

Conversely, the roller (5b), at the back of shelf (1) is idle and is supported by supporting pins fixed to two sliding blocks (6) which slide along the internal wall of the structural sections (4).

As mentioned previously, the shelf in question (1) consists of a conveyor belt (7) which covers practically the entire upper surface of the shelf; said belt (7) rotates in a closed circuit around the above two rollers (5a) and (5b), in a direction which includes the two parallel horizontal sections - one above, and the other under the surface (2) - and two 180° connecting corners around the surface of the rollers (5a) and (5b).

Obviously, the front roller (5a), the motor roller, draws the belt (7) while the rear roller (5b), i.e. the driven roller, ensures the correct tension of the belt (7) thanks to the fact that it can slide along the supporting structural sections (4) on the above sliding blocks (6).

Once this roller (5b) has been driven to the position which ensures the ideal tension of the belt (7), the sliding blocks (6) can fix securely to the structural sections (4) by means of stopping mechanisms.

In the preferred embodiment of the invention illustrated in the enclosed drawings, it can be noted that the belt (7) starts its rectilinear path above the surface (2), rising from a longitudinal slot (2c) positioned towards the rear edge of the surface (2), while it returns below surface (2) to follow the bottom return path of its circuit, through a second longitudinal slot (2d), at the front of the surface (2).

Regarding the motorization of the drawing roller (5a), it should be noted that this may be semiautomatic or fully automatic.

In any case, one end of the motor roller (5a) is characterised by a keyed on crown gear (8) which engages a first gear (9) positioned on the internal face of the structural metal section (4); this first gear (9) engages in turn with a second gear (10) pivoted on the internal face of the structural section (4), but in a slightly lower position, having at the centre a projecting pin (10a).

Said pin (10a), is in fact the power drive of the motor roller (5a), and in the case of the semiautomatic version, it is possible to intervene on said pin (10a) with an electric tool, very similar to an electric drill or screwdriver, which, coupling with the pin (10a) of the last gear (10) starts the rotation of the entire set of gears and consequently also of the motor roller (5a).

This is considered a semiautomatic version because, in this case there would have to be an operator in the supermarket, who, with a tool of this kind, is responsible for supervising the shelves and for moving forwards the conveyor belts of those shelves from which the products of the first rows have already been removed.

In the fully automatic version, each shelf must be equipped with an electric motor connected securely to the power drive of the motor roller; said motor should be operated by sensors, preferably photoelectric cells positioned on the front edge of shelf (1), and which can detect the presence or absence of goods at the front of the surface (2).

Starting from a situation whereby the shelf is fully stocked with goods (that is a situation whereby the photoelectric cells detect the presence of product at the front of the shelf), the photoelectric cells must transmit an activation signal to the motor when they detect that the first row of products has been removed completely; these photoelectric cells must then stop the motor, and consequently the conveyor belt, as soon as they detect that the products in the row behind have moved forwards to occupy the front row of the shelf.

## Claims

**1)** A shelving shelf for self-service supermarkets having a conveyor belt for moving grocery products progressively from the back to the front of the shelf, consisting of a conventional metal box-shaped structure including a rectangular resting surface (2) with perimeter edges bent 90° downwards, and whose transverse edges (2b) rest on transverse shelves at the sides of the shelving, characterised in that the same consist of:
- two structural metal sections (4) fixed at the bottom of the surface (2), parallel but positioned slightly inwards with respect to the transverse edges (2b) and which extend practically from the front edge to the back edge of shelf (1);
- two rollers (5a) and (5b) fixed to said structural sections (4) and positioned parallel, but slightly inwards with respect to the longitudinal edges (2a) of shelf (1); in particular, the roller (5a) positioned towards the front of the shelf (1) is supported by supporting pins fixed directly to the above structural metal sections (4), while roller (5b), positioned towards the back of shelf (1) is idle and supported by supporting pins fixed to two sliding blocks (6) sliding along the internal wall of the structural sections (4), but which can be fixed securely by appropriate mechanisms;
- a power drive consisting of a projecting pin (10a) connected, by means of a series of idle gears, to the above motor roller (5a): in particular one end of said roller (5a) being characterised by a keyed on crown gear (8) which engages a first gear (9) positioned on the internal face of the structural metal section (4) and which in turn engages a second gear (10) pivoted on the internal face of the structural section (4), but in a slightly lower position, having at the centre the above projecting pin (10a).
- a conveyor belt (7), which can practically cover the entire upper surface of the shelf (1), rotating in a closed circuit around the motor roller (5a) and the driven motor (5b), in a direction which includes two parallel horizontal sections - one above and the other below the surface (2) - and two 180° connecting corners around the surface of the rollers (5a) and (5b); in particular said belt (7) being capable of rotating around shelf (1) through two slots (2c) and (2d) provided on the longitudinal edge of surface (2).

**2)** A shelf for the shelving of self-service supermarkets having a conveyor belt which can move goods progressively from the back to the front of the shelf, according to claim 1, characterised, in a fully automatic constructive embodiment, by an electric motor securely coupled to the power drive, operated automatically by sensors, which in the preferred embodiment are photoelectric cells, positioned on the front edge of shelf (1), which can detect the presence/absence of goods at the front of surface (2).
